# EUROPEAN PATENT APPLICATION

(11) **EP 2 608 139 A1**
(43) Date of publication of application: **26.06.2013**
(21) Application number: 11870057.4
(22) Date of filing: 27.07.2011
(51) Int. Cl.: G06Q 20/00

(54) **MOBILE DEVICE PAY METHOD**

(71) Applicant: WANIN INTERNATIONAL CO., LTD., Xitun Dist Taichung city 407 (TW)
(72) Inventor: HSIAO, Cheng-Hao, Taichung City 408 (TW)
(74) Representative: Chaillot, Geneviève
(86) International application number: PCT/CN2011/001234
(87) International publication number: WO 2013/013341

(57) **Abstract**

The present invention relates to a micropayment transaction technology, more particularly, the present invention relates to a mobile device payment method, which is able to control consumption and enhance transaction security for buyer. The present invention is able to process payment by letting the buyer register personal account number in a transaction platform in advance via a mobile device and generating a numbered account after verification for later prepay consumption. Thus, the numbered account and the mobile device are applied for user's personal identification. Thus the user is able to control consumption efficiently, and the prepayment or the consumption both need identification to prevent credit card from been stolen or leaked out and fraud financial transaction, and the transaction security is highly increased.

## Description

### Field of the invention

The present invention relates to a micropayment transaction technology, more particularly, the present invention relates to a mobile device payment method, which is able to control consumption and enhance transaction security for buyer.

### Background of the invention

When doing micropayment via mobile devices, user is easy to spend too much money duet to personal bad habit of consumption. And, usually parents pay for younger buyer's bill and the phone bill has lower privacy security, which causes burden to user. Usually the micropayment via mobile device is handled by financial companies, and the consumer has to pay for goods and commission charge, which increases pressure on user's economic status.

Recently, internet technologies are fast developed and the applications are widely applied. Internet shopping becomes a consumption channel in modern life, and many bidding, online sale websites are developed. In conventional internet shopping technologies, it is unable to provide a completely safe transaction platform, and many fraud activities occurred. For example, the buyer may have already paid but unable to receive goods, or the seller may have already shipped the goods but unable to receive payment, the seller may fraud on the buyer by dishonest advertisement, a fraud transaction may occur by paying by other's credit card data, or the registration data of buyer/seller is not complete, and the administrator of the internet transaction platform is unable to control the status. All aforementioned status causes a higher risk when doing transaction on bidding or shopping website.

To solve the risk in Internet transaction, the industries developed many Internet transaction secure apparatus, deliver flow control, and money flow control. Taiwan Patent No. 1254230 disclosed a "Real-Time messaging E-Business System". Taiwan Patent No. 1229278 disclosed a "merchandise transaction and agency process system by using computer". Taiwan Patent No. 1321760 disclosed a "Internet business, bidding transaction confirmation method and calculation". Taiwan Patent No. 1322386 disclosed a "Method for Securing Transactions Carried out Remotely Across an Open Communication Network". Taiwan Patent No. I309392 disclosed a "Internet payment method and system". Taiwan Patent No. M329213 disclosed a "Internet sales organization with the function of credit control ". Taiwan Patent No. M361066 disclosed a "Payment and delivery device for network transaction".

But in aforementioned transaction system or method, the user mainly uses credit card or real account in bank for transaction. During transaction, it is easy to have the user's credit card or bank deposit card been recorded due to virus or similar technologies, and the credit card or bank deposit card would be stolen or leaked out, and the transaction security cannot be ensured. Thus, there are still many disadvantages presenting in conventional technologies and applications.

That is, the conventional internet transaction and micropayment via mobile device still face several problems and cannot satisfy real requirement of transaction security, and further improvements are needed.

### Summary of the invention

The objective of the present invention is to provide a mobile device payment method for controlling consumption by a mobile device to prevent over consumption and enhance economic efficiency.

Another objective of the present invention is to provide a mobile device payment method with high security, which applies double verification to prevent leakage of credit card number and account information and increase security of transaction.

The mobile device payment method to achieve the aforementioned objectives is characterized in that an user uses a mobile device to prepay money or consume money on a cash flow management platform via a telecom company, and the method to activate an user account comprises steps of:
a registrant registers a user's phone number and an Personal identification code via a online service webpage provided by the cash flow management platform;
the cash flow management platform receives a registration notice and sends brief codes to the user and the telecom company respectively according to the phone number;
if the user receives the brief code, then the user replies the brief code and the Personal identification code to the telecom company by the registered phone number;
the telecom company does plausibility check of the phone number and notices the real estate to the cash flow management platform, and the cash flow management platform also checks the brief code to verify whether the registrant is the user or not;
if the registrant is the user, then the cash flow management platform generates a numbered account combined with a anti-fraud number according to the registered phone number.

Therefore, by utilizing the aforementioned function, the present invention is able to process payment by letting the buyer register personal account number in a transaction platform in advance via a particular mobile device and generating a numbered account with anti-fraud code as a virtual bank account after verification for later prepay consumption. Thus, the verification can be done via Personal identification code and mobile device to prevent illegal transaction. Also the buyer can control consumption efficiently. Thus the present invention has obvious improvement in transaction security, consumption control, and anti-leakage of personal data, and can enhance additional values.

### Brief description of the drawings

Fig. 1 shows the block diagram of the mobile device payment method of the present invention comprising relation between all devices;
Fig. 2 shows the flow diagram of the mobile device payment method of prepay money from a real account to a numbered account with anti-fraud code;
Fig. 3 shows the flow diagram of the mobile device payment method of when the user does not register in advance but prepay money to the cash flow management platform; and
Fig. 4 shows the flow diagram of the mobile device payment method of when the user uses the numbered account with anti-fraud code for consumption.

Parts no.: user 1, registrant 1', mobile device 11, real account 12, cash flow management platform 2, numbered account 21, telecom company 3, store 4, store bank account 41.

### Detailed description of the invention

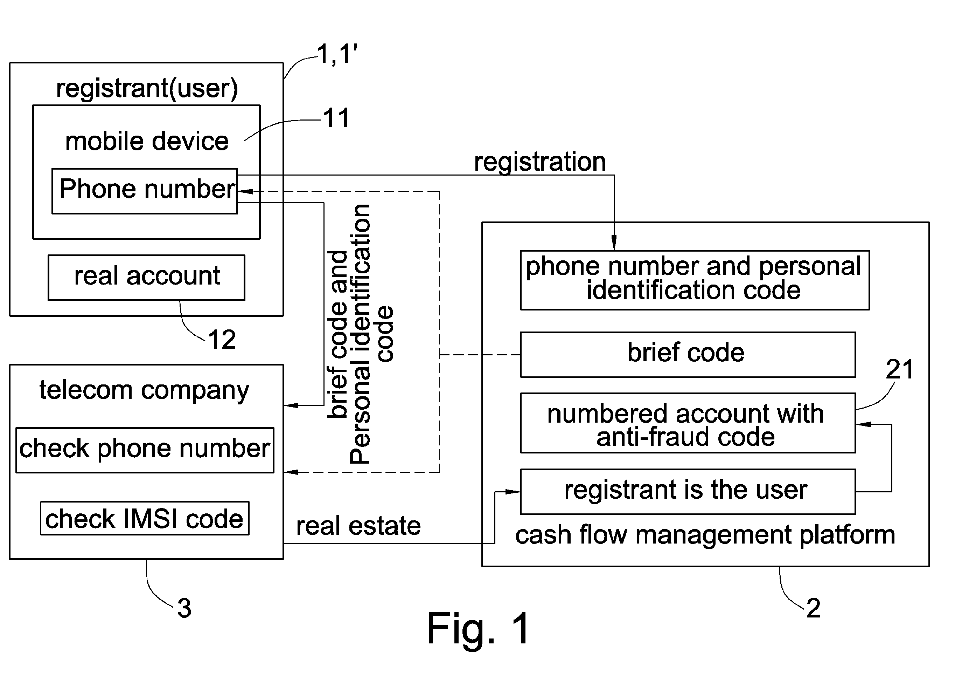

Refer to Fig. 1, which shows the mobile device payment method of the present invention, which is characterized in that an user 1 uses a mobile device 11 to prepay money or consume money on a cash flow management platform 2 via a telecom company 3. The method is realized by the mobile device 11, the cash flow management platform 2, and the telecom company 3.

The method realized by the cash flow management platform 2 to activate an user account comprises steps of:
a registrant 1' registers a user's personal account number including personal data, user1's phone number, such as 0912345678, and an Personal identification code, such as 8888, via a online service webpage provided by the cash flow management platform;

The cash flow management platform 2 receives a registration notice and sends brief codes to the user 1 and the telecom company 3 respectively according to the phone number;
if the user 1 receives the brief code via webpage or the mobile device 11, then the user 1 replies the brief code and the Personal identification code to the telecom company 3 by the registered phone number;
proceeding the plausibility check of the phone number and noticing the real estate to the cash flow management platform 2 by the telecom company 3, and the cash flow management platform 2 also checks the brief code to verify whether the registrant 1' is the user 1 or not; and verifying the user 1's personal data as an address name for later prepaid, consumption, and etc.

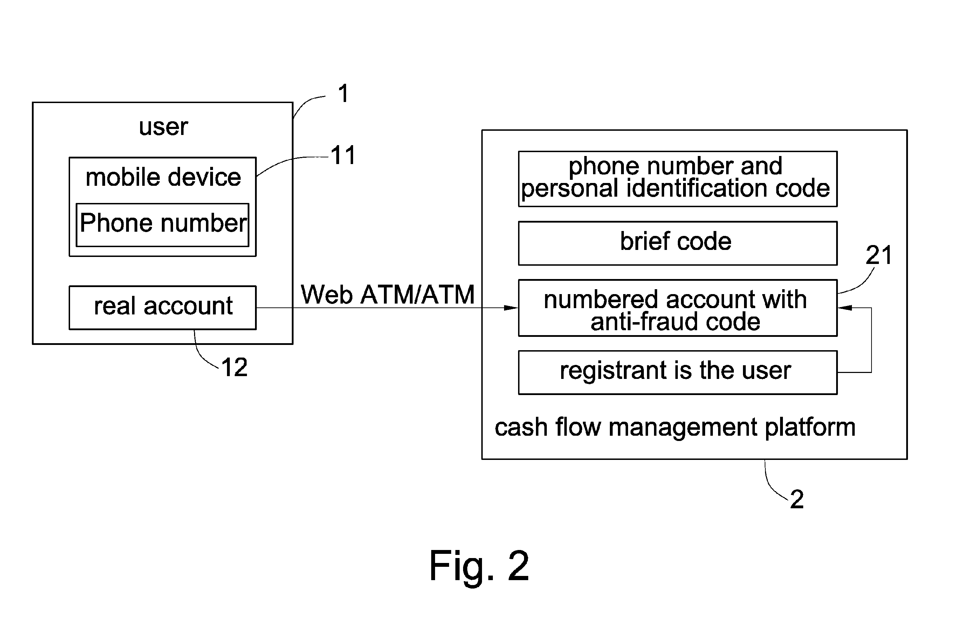

If the registrant 1' is the user 1, then the cash flow management platform 2 generates a numbered account 21 combined with a anti-fraud number according to the registered phone number; the numbered account 21 combined with a anti-fraud number generated by the cash flow management platform 2 is provided to real account of the user 1 for prepaying money and then the user 1 can use it via the mobile device 11, as shown in Fig. 2.

When proceeding micropayment via the cash flow management platform 2, the cash flow management platform 2 will do identity validation according to the user's phone number, and the user 1 is able to prepay money or spend money. Since the phone number is cooperated with the anti-fraud number of the numbered account 21 in the cash flow management platform 2, the cash flow management platform 2 is able to fast compare the numbered account 21 with anti-fraud code 21 with the prepaid money.

The method of activating the micropayment of the cash flow management platform 21 comprises the steps as followed. When the user 1 first time use the cash flow management platform 2 via internet, the user 1 has to input the user 1's phone number according to the index or notice on the webpage of the cash flow management platform 2. Then the webpage of the cash flow management platform 2 will present a brief code, such as 011, and send the brief code to the telecom company 3 synchronously. Then, per instruction on the webpage of the cash flow management platform 2, the user input the brief code, such as 911, jointly with a personal identification code, such as 8888, via the webpage or the mobile device 11 with registered personal phone number, such as 0912345678. Then the user 1 sends a message to the telecom company 3 or calls the telecom company 3 via the mobile device 11. The telecom company 3 performs plausibility check, i.e. the telecom company 3 check user 1's phone number jointly with the international mobile subscriber identity, IMSI, to check if the phone number is registered by the user 1 in telecom company 3. The telecom company 3 checks whether the phone number is corresponding to the IMSI code of the user's card. And, the cash flow management platform 2 checks the brief code to confirm whether the registrant 1' is the user 1. If the registrant 1' is the user 1, then the cash flow management platform 2 generates a numbered account 21 with anti-fraud code according to the registered phone number, such as 55165 912345678. The cash flow management platform 2 of the present invention cooperates with the telecom company 3 to provide a data validation to check whether the phone number registered by the user 1 is corresponding to the numbered account 21 with anti-fraud code in the cash flow management platform 2. The IMSI code is set by the telecom company 3, which will not be recorded by others. Then the money in the real account 12 of the user 1, such as 000247513588, not public, can be transferred to the numbered account 21 with anti-fraud code of the user 1 in the cash flow management platform 2. Then the numbered account 21 with anti-fraud code can be activated and the money in the numbered account 21 can be used later.

As shown in Fig. 2, the user 1 can prepay money via Web ATM or real ATM. The user 1 can transfer (or wire transfer) money from the real account 12 to the numbered account 21 with anti-fraud code of the user 1 in the cash flow management platform 2. When the money is transferred, the cash flow management platform 2 will send a message to the user 1 that numbered account 21 with anti-fraud code has been prepaid, as well as the balance of the numbered account 21 with anti-fraud code. The prepayment process is done.

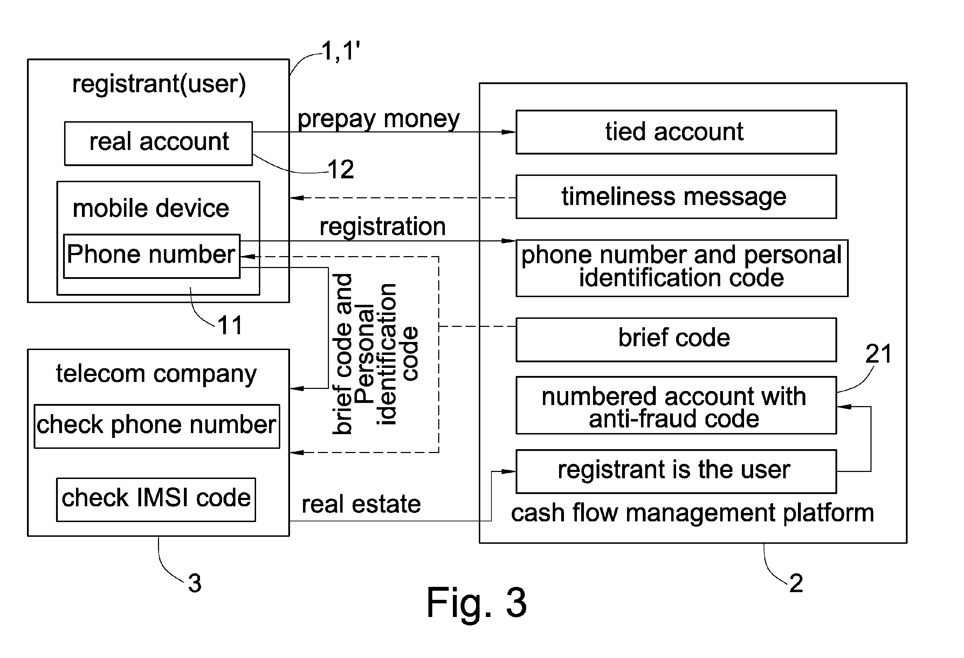

As shown in Fig. 3, if the user 1 does not register in advance but prepay money to the cash flow management platform 2, the method to activate an user account comprises steps of followed in cash flow management platform 2.
recognizing the prepay real account of user 1 as a bonding account by the cash flow management platform 2;
sending timeliness message by the cash flow management platform 2 to the user 1 to notice the user 1 to register user 1's phone number and Personal identification code in the cash flow management platform 2;
a registration notice is received by the cash flow management platform 2 and brief codes are sent to the user 1 and the telecom company 3 respectively according to the phone number;
if the user 1 receives the brief code via webpage or mobile device 11, then the user 1 replies the brief code and the Personal identification code to the telecom company 3 by the registered phone number;
the telecom company 3 does plausibility check of the phone number and notices the real estate to the cash flow management platform 2, and the cash flow management platform 2 also checks the brief code to verify whether the registrant 1' is the user 1 or not;
if the registrant 1' is the user 1, then the cash flow management platform 2 generates a numbered account 21 combined with a anti-fraud number according to the registered phone number;
if the user 1 does not register in the cash flow management platform 2 timely, the cash flow management platform 2 invalidates the prepaid money and returns the prepaid money to the original user 1's account.

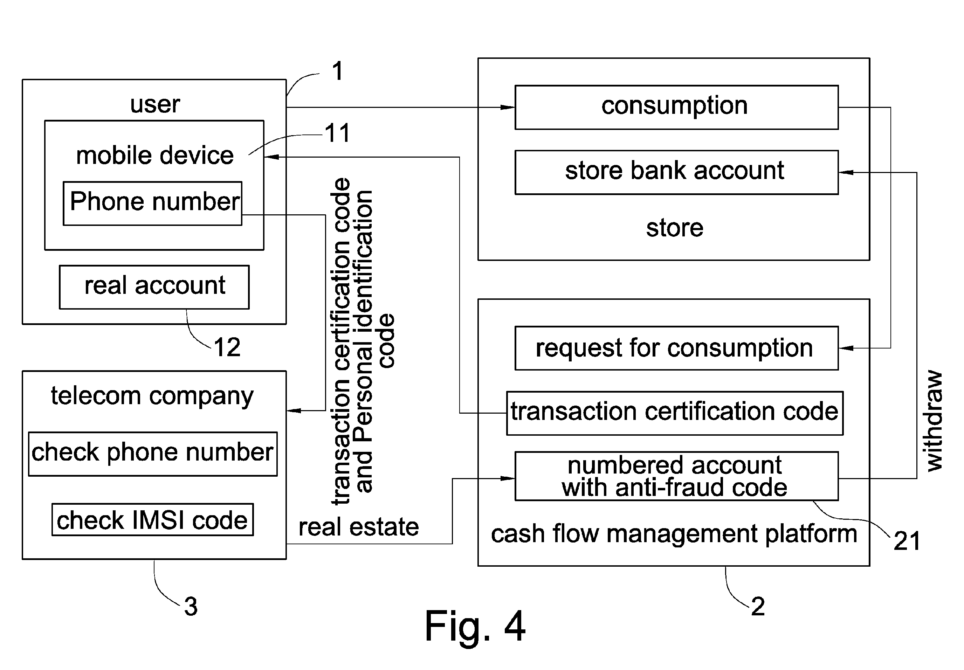

Further, refer to Fig. 4, which shows that the user 1 uses a mobile device 11 to launch the numbered account 21 with anti-fraud code, such as 55165 912345678, in the cash flow management platform 2 to consume money and for the user 1 to use the numbered account 21 to do internet payment, and the method further comprises the steps as followed.
selecting an product with online-payment by the user 1 via the device;

Inputting a phone number on a story 4 webpage with online-payment by the user 1 via the mobile device 11;
sending a transaction certification code, such as 577, for being shown on the story 4 webpage to the user 1 after the cash flow management platform 2 receives the consumption request of the user 1;
sending the transaction certification code, such as 577, and the Personal identification code, such as 8888, to the telecom company 3 via the mobile device 11 of user 1 according to the notice or index on the store 4 webpage;
proceeding the plausibility check of the phone number, such as 0912345678, and noticing the real estate to the cash flow management platform 2 by the telecom company 3, and the cash flow management platform 2 also check the transaction certification code, such as 577, and the numbered account 21 with anti-fraud code, such as 55165 912345678;
when the phone number, such as 0912345678, is determined as real by the telecom company 3, and the transaction certification code, such as 577, is determined as real by the cash flow management platform 2, the phone number of the user 1 is then checked jointly with the data of the registered personal account number, when it shows matching result, the user is lead to check-out webpage; And the user 1 is informed that the payment will be withdrawn from the numbered account 21 with anti-fraud code;
after the transaction is close-the-deal, the cash flow management platform 2 deducts the payment from the numbered account 21 with anti-fraud code, such as 55165 912345678, and transfers the payment from the consumer's numbered account 21 with anti-fraud code, such as 55165 912345678, to the store bank account 41 in the cash flow management platform 2 immediately.

The present invention further shows that the user 1 uses a mobile device 11 to launch the numbered account 21 with anti-fraud code in the cash flow management platform 2 to consume money and for the user 1 to use the numbered account 21 with anti-fraud code to do internet payment, and the method further comprises the steps as followed.
providing phone number to the store 4 by the user 1, and the store 4 requests user 1 consumption to the cash flow management platform 2;
sending a transaction certification code to the store 4 and the user 1 after the user 1 consumption request is received by the cash flow management platform 2;
sending the transaction certification code and the Personal identification code of the user 1 to the telecom company 3 by the user 1 via the user's mobile device 11;
proceeding the plausibility check of the phone number and noticing the real estate to the cash flow management platform 2 by the telecom company 3, and the cash flow management platform 2 also check the transaction certification code and the numbered account 21 with anti-fraud code;
when the phone number is determined as real by the telecom company 3, and the transaction certification code is determined as real by the cash flow management platform 2, the phone number of the user 1 is then checked jointly with the data of the registered personal account number, when it shows matching result, the user 1 is lead to check-out webpage;
after the transaction is close-the-deal, the cash flow management platform 2 deducts the payment from the numbered account 21 with anti-fraud code, and transfers the payment from the consumer's numbered account 21 with anti-fraud code to the store bank account 41 in the cash flow management platform 2 immediately.

The mobile device payment method of the present invention is advantaged in many ways as followed referring to conventional technologies.
1. the present invention requires that a prepaid money has to be stored in a virtual account, which will form a binding force to prevent the user from spending too much money due to personal bad habit of consumption. And the balance sheet is provided by the cash flow management platform instead of been provided jointly with phone bill, thus consumption privacy can be ensured.
2. the present invention is able to inform the balance status of the virtual account to the user immediately, which means the user can spend as much money as the money stored in real account, and the consumption can be controlled.
3. the present invention requires the cash flow management platform for directly cash flowing in/out control, and the money does not go through telecom company. Instead of the present invention, conventional technologies usually require that mobile device micropayment goes through financial companies, and thus the consumer has to pay for goods and commission charge. Thus the present invention can save unnecessary cost.
4. according to the present invention, the prepaid money and consumption requires personal identification code and mobile device, thus the user is free from credit card or deposit card fraud events or the leakage of card number, which makes the user safe.
5. According to the present invention, the store can be both virtual store and real store. When the buyer wants to buy goods, the buyer only needs to identify the payment method, and the buyer can pay by virtual account via mobile device. Thus the buyer does not have to bring too much cash when he goes out and the personal safety can be enhanced.

The aforementioned description exemplarily explains the present invention and is not intended to limit the present invention. People skilled in the art can modify the present invention within the scope and spirit of the claims after understands the present invention, which should be deemed as within the scope of protection of the claims of the present invention.

## Claims

1. A mobile device payment method, which is **characterized in that** an user uses a mobile device to prepay money or consume money on a cash flow management platform via a telecom company, and the method to activate an user account comprises steps of:
a registrant registers a user's phone number and an Personal identification code via a online service webpage provided by the cash flow management platform;
the cash flow management platform receives a registration notice and sends brief codes to the user and the telecom company respectively according to the phone number;
if the user receives the brief code, then the user replies the brief code and the Personal identification code to the telecom company by the registered phone number;
the telecom company does plausibility check of the phone number and notices the real estate to the cash flow management platform, and the cash flow management platform also checks the brief code to verify whether the registrant is the user or not;
if the registrant is the user, then the cash flow management platform generates a numbered account combined with a anti-fraud code according to the registered phone number.

2. The mobile device payment method as claimed in claim 1, wherein the user is able to transfer the money from an real account to the numbered account of the user in the cash flow management platform as the money when the numbered account is activated and the money of an instant prepay numbered account.

3. The mobile device payment method as claimed in claim 1, wherein the user use a mobile device to launch the numbered account with anti-fraud code in the cash flow management platform to consume money and for the user to use the numbered account to do internet payment, and the method further comprises the steps of:
selecting an product with online-payment by the user via the device;
inputting a phone number on a story webpage with online-payment by the user via the mobile device;
sending a transaction certification code for being shown on the story webpage to the user after the cash flow management platform receives the consumption request of the user;
sending the transaction certification code and the Personal identification code to the telecom company via the mobile device of user according to the notice or index on the webpage;
proceeding the plausibility check of the phone number and noticing the real estate to the cash flow management platform by the telecom company, and the cash flow management platform also check the transaction certification code and the numbered account;
when the phone number is determined as real by the telecom company, and the transaction certification code is determined as real by the cash flow management platform, the phone number of the user is then checked jointly with the data of the registered personal account number, when it shows matching result, the user is lead to check-out webpage;
after the transaction is close-the-deal, the cash flow management platform deduct the payment from the numbered account, and transfers the payment from the consumer's numbered account to the store bank account in the cash flow management platform immediately.

4. The mobile device payment method as claimed in claim 1, wherein the user use a mobile device to launch the numbered account with anti-fraud code in the cash flow management platform to consume money and for the user to use the numbered account to do internet payment, and the method further comprises the steps of:
providing phone number to the store by the user, and the store requests user consumption to the cash flow management platform;
sending a transaction certification code to the store and the user after the user consumption request is received by the cash flow management platform;
sending the transaction certification code and the Personal identification code of the user to the telecom company by the user via the user's mobile device;
proceeding the plausibility check of the phone number and noticing the real estate to the cash flow management platform by the telecom company, and the cash flow management platform also check the transaction certification code and the numbered account;
when the phone number is determined as real by the telecom company, and the transaction certification code is determined as real by the cash flow management platform, the phone number of the user is then checked jointly with the data of the registered personal account number, when it shows matching result, the user is lead to check-out webpage;
after the transaction is close-the-deal, the cash flow management platform deduct the payment from the numbered account, and transfers the payment from the consumer's numbered account to the store bank account in the cash flow management platform immediately.

5. A mobile device payment method, which is **characterized in that** an user uses a mobile device to prepay money or consume money on a cash flow management platform via a telecom company, and if the user does not register in advance but prepay money to the cash flow management platform, the method to activate an user account comprises steps of:
recognizing the prepay entity account of user as a bonding account by the cash flow management platform;
sending timeliness message by the cash flow management platform to the user to notice the user to register user's phone number and Personal identification code in the cash flow management platform;
a registration notice is received by the cash flow management platform and brief codes are sent to the user and the telecom company respectively according to the phone number;
if the user receives the brief code, then the user replies the brief code and the Personal identification code to the telecom company by the registered phone number;
the telecom company does plausibility check of the phone number and notices the real estate to the cash flow management platform, and the cash flow management platform also checks the brief code to verify whether the registrant is the user or not;
if the registrant is the user, then the cash flow management platform generates a numbered account combined with a anti-fraud number according to the registered phone number;
if the user does not register in the cash flow management platform timely, the cash flow management platform invalidates the prepaid money and returns the prepaid money to the original user's account.
